# EUROPEAN PATENT APPLICATION

(11) **EP 4 700 586 A1**
(43) Date of publication of application: **25.02.2026**
(21) Application number: 24195686.1
(22) Date of filing: 21.08.2024
(51) Int. Cl.: G06F 11/34, H04L 43/50, G06F 11/3668

(54) **METHODS AND SYSTEMS FOR EXECUTING FUNCTIONS AS A SERVICE (FAAS) APPLICATIONS**

(71) Applicant: Siemens Aktiengesellschaft, 80333 München (DE)
(72) Inventor: Sauer, Markus, 81739 München (DE); Singh, Saurabh Narayan, 81739 München (DE)
(74) Representative: Siemens Patent Attorneys

(57) **Abstract**

A method for executing Function as a Service (FaaS) functions involves bringing a FaaS function to a test execution with a hardware configuration and testing it based on a performance criterion to obtain a test result. The test result is compared with at least one further test result for a test execution of the FaaS function with at least one further hardware configuration. Based on the comparison, the hardware configuration for executing the FaaS function is selected. This method enables optimal hardware selection for FaaS function execution by evaluating performance across different configurations before operational deployment.

## Description

The present invention relates to methods and systems for executing Functions as a Service (FaaS) applications.

Function as a Service (FaaS) is a cloud computing paradigm that has gained significant traction in recent years. FaaS adoption continues to grow across various industries, including manufacturing, logistics, and industrial automation.

The Function as a Service paradigm allows developers to execute code in response to events without the complexity of building and maintaining the underlying infrastructure. FaaS platforms automatically manage the allocation and scaling of computing resources, enabling developers to focus solely on writing and deploying individual functions.

The rise of FaaS is closely tied to the broader trends of microservices architecture and serverless computing. By breaking down applications into smaller, independent functions, FaaS offers potential benefits in terms of scalability, cost-efficiency, and reduced operational overhead. However, the effective deployment and execution of FaaS functions present unique challenges.

One key challenge in FaaS environments is the performance of functions across diverse hardware configurations. Cloud providers typically offer a range of computing resources with varying processor architectures, memory capacities, and other specifications. The performance of a given function can vary significantly depending on the underlying hardware it runs on.

Traditional approaches to resource allocation in cloud environments often rely on static configurations or manual tuning by system administrators. These methods may not adequately account for the specific requirements of individual functions or adapt to changing workloads over time. As a result, FaaS deployments may suffer from suboptimal performance or unnecessary resource consumption.

Furthermore, the ephemeral nature of FaaS execution environments adds complexity to performance optimization efforts. Functions are typically short-lived and may be invoked sporadically, making it difficult to gather consistent performance data or apply traditional optimization techniques.

### SUMMARY OF INVENTION

According to the present disclosure, a method for executing FaaS functions is provided. The method includes, before operatively executing a FaaS function, first bringing the FaaS function to a test execution with a hardware configuration and testing it based on a performance criterion, so that at least one test result is obtained. The method further includes subjecting the test result to a comparison with respect to the performance criterion with at least one further test result for a test execution of the FaaS function with at least one further hardware configuration. Based on the comparison, the hardware configuration with which the FaaS function is executed is selected. This approach may offer the advantage of optimizing the performance of FaaS functions by dynamically selecting a more suitable hardware configuration, potentially leading to improved execution efficiency and resource utilization.

According to other aspects of the present disclosure, the method may include one or more of the following features:
The at least one further test result for the at least one further hardware configuration may be obtained by bringing the execution of the FaaS function with the at least one further hardware configuration to a further test execution and testing it based on the performance criterion. This feature may provide the advantage of real-time performance comparison across multiple hardware configurations, enabling more accurate and up-to-date selection decisions.

The at least one further test result may be obtained from a database, whose at least one further test result is obtained from a previous test execution of the FaaS function with the at least one further hardware configuration based on the performance criterion. This aspect may offer the advantage of reducing the time and resources required for repeated testing by leveraging historical performance data.

The method may be executed when a necessity to execute the FaaS function is probable but not yet given. This proactive approach may provide the advantage of reducing latency by preparing optimal hardware configurations in advance of actual function execution.

The method may be operated in an industrial network. The industrial network may be a manufacturing network and/or a maintenance network and/or a logistics network. These aspects may offer the advantage of optimizing FaaS function performance in critical industrial environments where efficiency and reliability are paramount.

The FaaS function may be a function that is required for manufacturing and/or maintenance and/or logistics. This feature may provide the advantage of enhancing the performance of key operational functions in industrial settings.

According to another aspect of the present invention, a control device for controlling the execution of FaaS functions according to the method according to the invention is provided. The control device is configured to cause a FaaS function, before it is operatively executed, to first be brought to a test execution with a hardware configuration and to be tested based on a performance criterion, so that at least one test result is obtained. The control device is configured to cause the test result to be subjected to a comparison with respect to the performance criterion with at least one further test result for a test execution of the FaaS function with at least one further hardware configuration. The control device is configured to select the hardware configuration with which the FaaS function is executed based on the comparison. This control device according to the invention may offer the advantage of automating the process of hardware configuration selection, potentially reducing manual intervention and improving overall system efficiency.

According to other aspects of the present disclosure, the control device may include one or more of the following features:
The control device may comprise a database with one or more further test results for a test execution of the FaaS function with at least one further hardware configuration. This feature may provide the advantage of quick access to historical performance data, potentially speeding up the decision-making process.

The control device may further comprise an execution module which is configured for the test execution of the FaaS function on a hardware configuration. This module may offer the advantage of facilitating controlled testing of FaaS functions across different hardware configurations.

The control device may comprise an analysis module which is configured for testing the FaaS function with a hardware configuration based on a performance criterion. This module may provide the advantage of standardized performance evaluation across different hardware configurations.

The control device may comprise a selection module which is designed to select the hardware configuration based on a comparison with respect to the performance criterion.

According to another aspect of the present disclosure, a computer program product is provided. The computer program product comprises instructions which, when these instructions and/or the computer program product are executed on a computer, instruct it to execute the method or to cause the execution of such a method. accessibility and adoption.

Non-limiting and non-exhaustive examples are described with reference to the following figures.

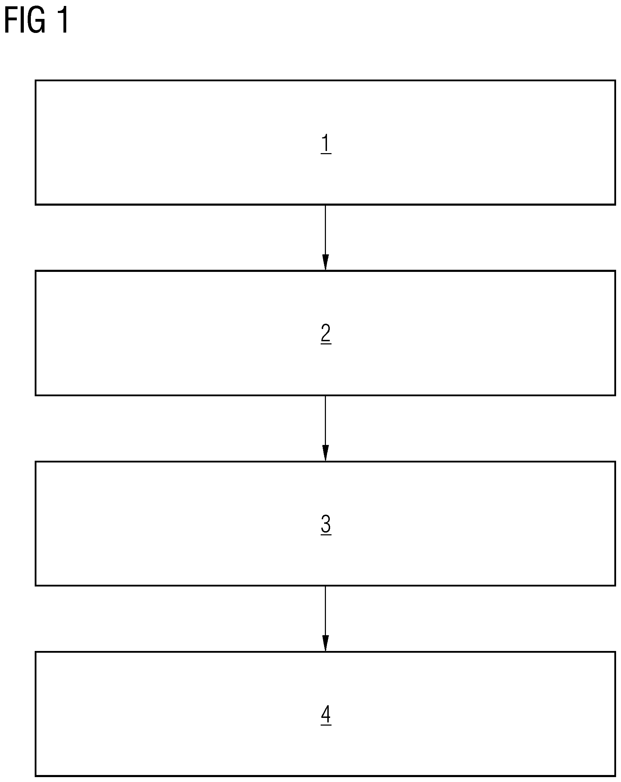

FIG. 1 illustrates a flowchart depicting a method for selecting an optimal hardware configuration for executing a Function as a Service (FaaS) function, according to aspects of the present disclosure.

This figure illustrates a flowchart depicting a method for selecting an optimal hardware configuration for executing a Function as a Service (FaaS) function based on performance testing. The primary purpose of this method is to evaluate and compare the performance of a FaaS function across different hardware configurations to determine the most suitable one for deployment.

The flowchart begins with Step 1, where a FaaS function is brought to a test execution environment equipped with a specific hardware configuration. This step constitutes the preparation for performance evaluation by preparing the function and the hardware for testing.

Following this, Step 2 involves testing the FaaS function based on a predefined performance criterion. This step is crucial as it generates the test results which are essential for subsequently comparing the performance across different hardware setups.

Step 3 in the flowchart is where the test result obtained from Step 2 is compared with at least one further test result from another hardware configuration. This comparison is pivotal as it helps in assessing which hardware configuration yields the best performance for the FaaS function.

The final step, Step 4, involves selecting the hardware configuration for executing the FaaS function. This selection is based on the comparisons made in Step 3. The chosen hardware configuration is the one that meets the performance criteria most effectively.

Throughout the flowchart, the sequence of steps is linear, moving from preparation and testing to comparison and selection. Each step is interconnected, with the outcome of one step directly influencing the subsequent step.

The method leverages comparative analysis to enhance decision accuracy, thereby potentially improving the function's performance in real-world applications.

Referring to FIG 1, the depicted flowchart illustrates a method for selecting an optimal hardware configuration for executing a Function as a Service (FaaS) function based on performance testing. In some aspects, the method begins with a FaaS function being brought to a test execution environment equipped with a specific hardware configuration (Step 1). This environment may be part of an Orchestration Testing Module (OTM), which is designed to spin up various environments for deploying test cases, function instances, and/or the function-as-a-service module.

In some cases, the FaaS function is tested based on a predefined performance criterion in Step 2. This performance criterion may be defined by a Probing Mechanism (PM), which pings the processor on which the FaaS function is running to measure the performance of that instance for the specific function instances under test. The PM may send a set of standardized inputs to the processor to measure the outputs and overall performance, creating a baseline against which the performance can be measured.

Following the testing, the test result obtained is compared with at least one further test result from another hardware configuration in Step 3. This comparison may be facilitated by an Analysis Engine (AE), which uses the results from the PM to create meaningful insights. These insights are used to populate a Knowledge Base (KB), which stores information about the performance of various hardware configurations.

Based on the comparison, the hardware configuration for executing the FaaS function is selected in Step 4 as described above. This selection may be made by a control device, which is configured to cause a FaaS function to undergo test execution with a hardware configuration and be tested based on a performance criterion before operative execution. The control device may also be configured to cause the test result to be subjected to a comparison with respect to the performance criterion with at least one further test result for a test execution of the FaaS function with at least one further hardware configuration.

The control device includes a database, also referred to as the Knowledge Base (KB) already mentioned above, with one or more further test results for a test execution of the FaaS function with at least one further hardware configuration. The control device may also include an execution module configured for the test execution of the FaaS function on a hardware configuration, an analysis module configured for testing the FaaS function with a hardware configuration based on a performance criterion, and a selection module designed to select the hardware configuration based on a comparison with respect to the performance criterion.

The control device plays a crucial role in the method for selecting an optimal hardware configuration for executing a FaaS function. In some cases, the control device is configured to cause the test result to be compared with at least one further test result for a test execution of the FaaS function with at least one further hardware configuration. This comparison may involve various parameters such as response time, available RAM during computation, available CPU capacity during computation, available cache, and other system parameters. The comparison may be facilitated by the Analysis Engine (AE), which uses the results from the Probing Mechanism (PM) to create meaningful insights. These insights are used to populate the Knowledge Base (KB), which stores information about the performance of various hardware configurations.

In the presently discussed embodiment,the control device is configured to select the hardware configuration for executing the FaaS function based on the comparison. With the help of a the selection module mentioned previously within the control device, which is designed to select the hardware configuration based on a comparison with respect to the performance criterion. The selection module may consider various factors such as the fastest computation, most resource optimized computation, cheapest computation, or various other paradigms. The selection module may also consider the ranges provided by the users, such as "Dual core processor with x as maximum system frequency and y amount of maximum RAM".

In the presently discussed embodiment, a computer program product is provided, which comprises instructions for executing the method for selecting an optimal hardware configuration for FaaS functions. When these instructions and/or the computer program product are executed on a computer, they instruct it to execute the method or cause the execution of such a method.

The computer program product may include instructions for bringing a FaaS function to a test execution with a hardware configuration, testing it based on a performance criterion, comparing the test result with at least one further test result for a test execution of the FaaS function with at least one further hardware configuration, and selecting the hardware configuration for executing the FaaS function based on the comparison. The computer program product may be stored on a non-transitory computer-readable medium and may be executed by a processor of a computer system.

In the presently discussed embodiment, the control device comprises several key components and modules that facilitate the execution of the FaaS function on an optimal hardware configuration. One such component is a database, which may store one or more further test results for a test execution of the FaaS function with at least one further hardware configuration. These test results may be obtained from previous test executions of the FaaS function with various hardware configurations based on the performance criterion. The database may be updated continuously as new test results are obtained, thereby providing a dynamic and evolving knowledge base for the system.

In the present invention, the control device may also include an execution module. This module may be configured for the test execution of the FaaS function on a specific hardware configuration. The execution module may interact with the Orchestration Testing Module (OTM) to spin up various environments for deploying test cases, function instances, and/or the function -as-a-service module. The execution module may also be responsible for registering the function-as-a-service to the Probing Mechanism (PM) for performance testing.

In the presently discussed embodiment, the control device comprises the analysis module. This module may be configured for testing the FaaS function with a hardware configuration based on a performance criterion. The analysis module may use the results from the Probing Mechanism (PM) to create meaningful insights. These insights may be used to update the database and influence the behavior of an Operational Orchestration Module (OOM). as described below.

In the presently discussed embodiment, the control device includes the selection module. This module is designed to select the hardware configuration based on a comparison with respect to the performance criterion. The selection module may consider various factors such as the fastest computation, most resource optimized computation, cheapest computation, or various other paradigms. The selection module may also consider the ranges provided by the users, such as "Dual core processor with x as maximum system frequency and y amount of maximum RAM".

In the presently discussed embodiment, a concept of Processor Classes (PCs) may be utilized. These PCs represent various kinds of processors and/or hardware configurations that the OTM has access to for spinning up test cases, function instances, and/or function-as-a-service. Every processor and hardware configuration used in the process may be part of one of the various PCs. For example, Processor Class 1 (PC1) may represent a specific hardware configuration without limiting the scope of the system for a specific hardware configuration. The PCs may be used by the control device, particularly the execution module, to determine the optimal hardware configuration for executing the FaaS function.

In the presently discussed embodiment, the Orchestration Testing Module (OTM) is a set of components and scripts used to spin up various environments for deploying test cases, function instances, and/or the function-as-a-service module. The OTM has access to various kinds of processors and/or hardware configurations, represented as the Processor Classes (PCs) mentioned previously. Each PC may represent a specific type of processor or hardware configuration, and every processor and hardware configuration used in the process may be part of one of the various PCs. For instance, Processor Class 1 (PC1) may represent a specific hardware configuration, but the scope of the system is not limited to this specific hardware configuration.

In the presently discussed embodiment, the Probing Mechanism (PM) may be used to ping the processor on which the Function-as-a-service is running to measure the performance of that instance for specific function instances under test. The PM sends a set of standardized inputs to the processor to measure the outputs and overall performance. These standardized inputs create a baseline against which the performance can be measured. The PM may work in conjunction with a Probing Mechanism Monitoring Component (PMM), which provides out-of-band monitoring capabilities for the function instance or module under test.

In the presently discussed embodiment, the Deployment Module (DM) may act as an interface between the developer and the Orchestration Testing Module (OTM) or Operational Orchestration Module (OOM). The DM may take the function-as-a-service requests and map them to the OTM and OOM. The DM may also start up a function instance of a specific PC and deploy the function on the corresponding function-as-a-service runtime of that instance.

In the presently discussed embodiment, the Analysis Engine (AE) uses the results from the Probing Mechanism (PM) to create meaningful insights, that may be used to populate the Knowledge Base (KB), which stores information about the performance of various hardware configurations. The AE may continuously compare the information from the PM to create an updated lookup table for the function-as-a-service instance. As the Knowledge Base (KB) is updated, the information from the AE may also be stored as part of the KB.

The Operational Orchestration Module (OOM) as mentioned previously is responsible for deploying the function workload of all applications. The OOM may consider the results from the Probing Mechanism (PM), the Analysis Engine (AE), and the Knowledge Base (KB) when orchestrating the deployment of functions. This allows the OOM to make informed decisions about the most efficient hardware configuration for running a specific function instance implementation or function-as-a-service.

The control device may operate in three stages: initial deployment and orchestration, probing and updating the Knowledge Base (KB), and efficient deployment. During the initial deployment and orchestration stage, the Knowledge Base (KB) may be populated with information such as matching programming languages to their potential processor classes. The Deployment Module (DM) may start up a function instance of a specific Processor Class (PC) and deploy the function on the corresponding function-as-a-service runtime of that instance.

In the present embodiment, the system may include a probing mechanism that measures the performance of specific function implementations in specific hardware configurations. This probing mechanism may be integrated with the Orchestration Testing Module (OTM) and may randomly select other configurations according to a statistical distribution to deploy function instances as performance probes. The results of these probes are passed on to the Analysis Engine (AE), which updates the Knowledge Base (KB) accordingly.

In the present embodiment, users may configure the number of times the probing mechanism is performed before the Knowledge Base (KB) is considered fully updated. This allows users to control the level of detail and accuracy in the Knowledge Base (KB). Additionally, users may provide parameters such as CPU ranges and other hardware specifications to guide the Deployment Module (DM) and Operational Orchestration Module (OOM) when starting function instances.

In the present embodiment,, the system may allow for different efficiency configurations within the probing mechanism. For example, the probing mechanism may test for the fastest computation, the most resource-optimized computation, or the cheapest computation. The Analysis Engine (AE) may take these configurations as input to produce the results. This flexibility allows the system to adapt to different performance requirements and optimize the deployment of function instances accordingly.

In the present embodiment, the method for executing FaaS functions may involve obtaining further test results from a database. This database, which may be part of the Knowledge Base (KB), may contain results from previous test executions of the FaaS function with various hardware configurations. These stored test results may provide valuable insights into the performance of the FaaS function under different hardware configurations, thereby aiding in the selection of an optimal hardware configuration for future executions of the FaaS function.

In the present embodiment, the method for executing FaaS functions may be executed proactively, when the necessity to execute the FaaS function is probable but not yet given. This proactive execution may allow the system to prepare for the execution of the FaaS function in advance, thereby reducing the time required for the function to start up and run when it is eventually invoked. This proactive execution may be particularly beneficial in scenarios where the FaaS function is expected to be invoked frequently or at regular intervals.

In the present embodiment, the method for executing FaaS functions may be operated in an industrial network. This industrial network may be a network of computers, servers, and other devices used in an industrial setting, such as a manufacturing plant, a logistics center, or a maintenance facility. The method may be used to execute FaaS functions that are critical to the operations of the industrial network, such as functions related to manufacturing processes, logistics operations, or maintenance tasks.

In the present embodiment, the industrial network in which the method is operated may be a manufacturing network, a maintenance network, or a logistics network. The manufacturing network may be a network of devices used in a manufacturing plant, the maintenance network may be a network of devices used in a maintenance facility, and the logistics network may be a network of devices used in a logistics center. The method may be used to execute FaaS functions that are specific to the operations of these networks, such as functions related to manufacturing processes, maintenance tasks, or logistics operations.

In the present embodiment, the method for executing FaaS functions may be used for FaaS functions that are required for manufacturing, maintenance, or logistics. These functions may be critical to the operations of a manufacturing plant, a maintenance facility, or a logistics center, and may be executed on demand as part of the FaaS paradigm. The method may allow these functions to be executed efficiently and effectively, thereby contributing to the overall performance and productivity of the industrial network.

In the present embodiment, the system may include an intelligent knowledge agent. This agent may be created and trained to approximate the best processor mapping for executing a FaaS function based on the structure and parameters of the function. The intelligent knowledge agent may use machine learning algorithms, statistical analysis, or other computational methods to analyze the structure and parameters of the function and predict the optimal processor mapping.

In the present embodiment, the intelligent knowledge agent uses the data stored in the Knowledge Base (KB) to make its approximations. The KB may contain information about the performance of various hardware configurations for executing different FaaS functions, which the intelligent knowledge agent may use as training data. The intelligent knowledge agent may also update the KB with its approximations, thereby contributing to the continuous learning and improvement of the system.

In the present embodiment, the intelligent knowledge agent may work in conjunction with the Analysis Engine (AE) and the Probing Mechanism (PM). The AE may provide the intelligent knowledge agent with insights about the performance of various hardware configurations, while the PM may provide the intelligent knowledge agent with real-time performance data from the test executions of the FaaS function. The intelligent knowledge agent may use this information to refine its approximations and improve the accuracy of its predictions.

In the present embodiment, the intelligent knowledge agent is presently, however, not necessarily, integrated with the control device. The control device may use the approximations made by the intelligent knowledge agent to select the optimal hardware configuration for executing a FaaS function. This integration may allow the control device to make more informed decisions about the deployment of FaaS functions, thereby improving the efficiency and effectiveness of the system.

In the present embodiment, the intelligent knowledge agent may be configured to consider various factors when approximating the best processor mapping. These factors may include the type of the function, the complexity of the function, the expected workload of the function, the available hardware configurations, and the performance criteria defined by the PM. The intelligent knowledge agent may weigh these factors according to their relevance and importance, and use them to make a balanced and optimal approximation of the best processor mapping.

## Claims

1. Method for executing FaaS functions, in which a FaaS function, before being operatively executed, is first brought to a test execution (1) with a hardware configuration and tested (2) based on a performance criterion, so that at least one test result is obtained, wherein the test result is subjected to a comparison (3) with respect to the performance criterion with at least one further test result for a test execution of the FaaS function with at least one further hardware configuration, and based on the comparison, the hardware configuration with which the FaaS function is executed is selected (4).

2. Method according to claim 1, in which the at least one further test result for the at least one further hardware configuration is obtained by bringing the execution of the FaaS function with the at least one further hardware configuration to a further test execution (1) and testing (2) it based on the performance criterion.

3. Method according to any of the preceding claims, in which the at least one further test result is obtained from a database, whose at least one further test result is obtained from a previous test execution (2) of the FaaS function with the at least one further hardware configuration based on the performance criterion.

4. Method according to any of the preceding claims, which is executed when a necessity to execute the FaaS function is probable but not yet given.

5. Method according to any of the preceding claims, which is operated in an industrial network.

6. Method according to any of the preceding claims, in which the industrial network is a manufacturing network and/or a maintenance network and/or a logistics network.

7. Method according to any of the preceding claims, in which the FaaS function is a function that is required for manufacturing and/or maintenance and/or logistics.

8. Control device for controlling the execution of FaaS functions according to a method according to any of the preceding claims, which is configured to cause a FaaS function, before it is operatively executed, to first be brought to a test execution (1) with a hardware configuration and tested (2) based on a performance criterion, so that at least one test result is obtained, wherein the control device is configured to cause the test result to be subjected to a comparison (3) with respect to the performance criterion with at least one further test result for a test execution of the FaaS function with at least one further hardware configuration, wherein the control device is configured to select (4) the hardware configuration with which the FaaS function is executed based on the comparison.

9. Control device, comprising a database with one or more further test results for a test execution (1) of the FaaS function with at least one further hardware configuration.

10. Control device, further comprising an execution module which is configured for the test execution (1) of the FaaS function on a hardware configuration.

11. Control device group according to the preceding claims, comprising an analysis module which is configured for testing (2) the FaaS function with a hardware configuration based on a performance criterion.

12. Control device according to any of the preceding claims, comprising a selection module which is designed to select (4) the hardware configuration based on a comparison (3) with respect to the performance criterion.

13. Computer program product comprising instructions which, when these instructions and/or the computer program product are executed on a computer, instruct it to execute a method according to any of claims 1 to 7 or to cause the execution of such a method.
